# EUROPEAN PATENT APPLICATION

(11) **EP 1 072 398 A1**
(43) Date of publication of application: **31.01.2001**
(21) Application number: 00114063.1
(22) Date of filing: 06.07.2000
(51) Int. Cl.: B32B 27/08, B44C 5/04

(54) **System and method for producing a laminate employing a plastic film**

(30) Priority: 29.07.1999 US 363466
(71) Applicant: Premark RWP Holdings, Inc., Wilmington, Delaware 19801 (US)
(72) Inventor: Krebs, Robert R., Georgetown, Texas 78628 (US)
(74) Representative: Patry, Didier Marcel Pierre

(57) **Abstract**

A thermoplastic film that may be used in making an end product, such as a high pressure decorative laminate is disclosed. The film may be formed of either a copolymer of styrene and an unsaturated monomer, and an additive, or a polyolefin polymer having polypolar functionality, and a cross-linking agent reactable with the polyolefin polymer. A colorant may also be provided to the film, if desired. The thermoplastic film may be utilized as a decorative layer or as a water resistant layer in an end product, such as a laminate.

## Description

### RELATED APPLICATIONS

The present application is a continuation-in-part of co-pending and commonly assigned U.S. Patent Application Serial No. 09/249,033, entitled "PIGMENTED BACKER FILM AND METHOD OF PRODUCTION", filed February 11, 1999, which is incorporated herein by reference. The present application is also related to co-pending and commonly assigned U.S. Patent Application Serial No. 09/294,723, entitled "LAMINATE EMPLOYING LIQUID RESISTANT FILM AND TWO SIDED SHEET", filed April 19, 1999, which is also incorporated herein by reference. The present application is also related to co-pending and commonly assigned U.S. Patent Application Serial No. 09/226,572, entitled "SYSTEM AND METHOD FOR ADHERING LAMINATE TO AN ALTERNATE SUBSTRATE MATERIAL", filed January 7, 1999, which is also incorporated herein by reference.

The present invention relates generally to the manufacture of a plastic film such as may be used in an end product, such as laminated products used for flooring, counter tops, table tops, and wall panels, and more specifically to systems and methods for manufacturing such a film to provide a desired characteristic to such laminated products.

Decorative laminates prepared by heat and pressure consolidation have been produced commercially for a number of years, and have found widespread acceptance in the building and furniture industry as counter and table tops, bathroom and kitchen work surfaces, wall paneling, partitions and doors. Such decorative laminates can be described as containing a number of laminate materials that are consolidated to form a unitary structure carrying a surface decoration which can range from something as simple as a solid color to something as complex as an embossed simulated wood grain finish.

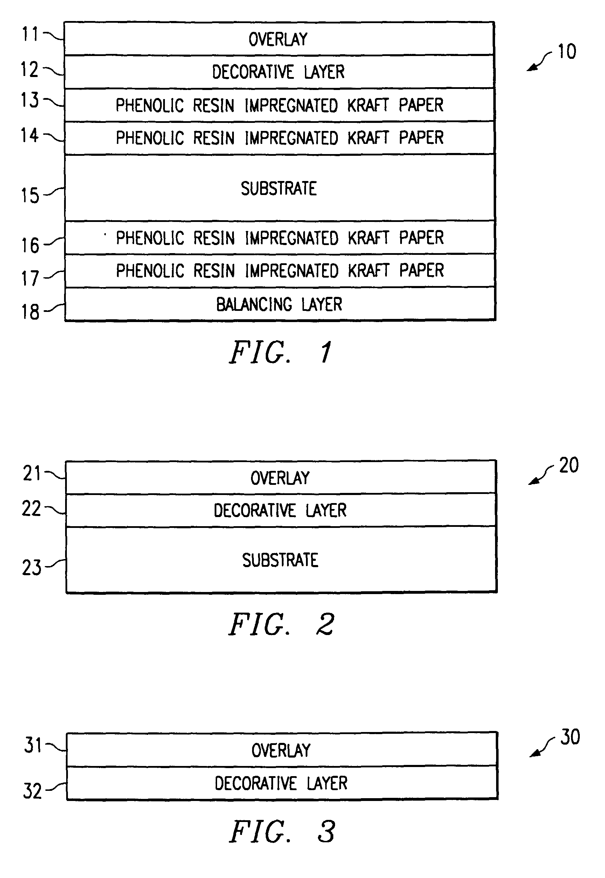

More specifically, a laminate generally comprises a plurality of layers of resin impregnated paper sheets, such as kraft paper sheets, consolidated or bonded together into a unitary structure under heat and pressure. As shown in FIGURE 1, a high pressure laminate 10 may be comprised of a thin aluminum oxide incorporated overlay sheet 11 impregnated with a protective substance, such as melamine resin, which provides color fastness, hardness, chemical resistance, and also resistance to brief exposure to water. The decorative laminate assembly may employ a decorative sheet 12 disposed under the overlay sheet 11, and sheets 13 and 14 of kraft paper impregnated with phenolic resin disposed below the decorative sheet. The decorative sheet 12 is usually made from saturating grade paper.

A core or substrate 15 may function to impart rigidity to the laminate. The core or substrate may be plywood, particle board, chipboard, hardboard, woodwaste, medium density fiber board, high density fiber board, cement-asbestos board, sheet rock, plaster board, and the like and other Alternate Substrate Materials (ASM). Such ASM may include non-wood cores or substrates, such as synthetic or non-cellulose substrate material, for example, recycled plastic substrates, ABS/PC, nylon, PVC, or the like. However, a core or substrate is not included with all laminate products.

The decorative sheet 12 generally functions to give an attractive appearance to the laminate, and along with the overlay 11 also gives the laminate panel its surface characteristics (i.e. resistance to chemical agents, heat, light, shock and abrasion). Usually decorative sheet 12 is high quality 50 to 125 pound per ream weight, pigment filled, alpha cellulose paper that has been impregnated with a water solution of melamine-formaldehyde resin, dried and partially cured, and finally cut into sheets of desired size. Prior to impregnation with the resin, the decorative sheet may be of a solid color or may comprise a decorative design, or a photo-gravure reproduction of natural materials, such as wood, marble, leather, etc.

A decorative laminate is generally obtained by placing the decorative laminate assembly between steel plates and subjecting the laminate stack to temperatures in the range of 120°-160°C and pressing in the range of about 800-1600 psi for a time sufficient to consolidate the laminate and cure the resins (generally about 25 minutes to an hour). This causes the resin in the paper sheets to flow, cure and consolidate the sheets into a unitary laminated mass. If desired, the consolidated sheets may be bonded or otherwise attached to substrate 15 to form a high-pressure decorative laminate.

For some end uses, it is desirable have a decorative laminate with uniform and homogeneous colors. This may be obtained by incorporating colored particles into the saturating grade paper. Traditionally this is accomplished by submerging paper fibers or wood fibers in water and adding pigments to the water. Usually these pigments are in particle form. The size of the pigment particles has to be selected so that when the fibers are taken out of the tank, most of the particles get trapped in the mat of fibers. This may be accomplished by using particles of size larger than the interstices in the mat of fibers. An advantage of using larger size pigment particles is that a greater percentage of the particles tend to remain in the paper. While a greater amount of the larger particles tend to remain in the paper, the coloring produced by using such larger particles is not as intense as the coloring produced by using smaller sized particles. Therefore, in order to provide more intense and uniform color to the fibers it is desirable that the size of the pigment particles be small. However, due to their size, a large percentage of the small pigment particles tend to pass through the paper fibers into the container filled with water. Some of these small particles may be reused, if desired. However, most of them have to be disposed of, resulting in wastage of resources and increasing the cost of production of the decorative layer.

Moreover, most prior art decorative layers are made by using paper, such as the aforementioned saturation grade paper, which is usually very expensive. These papers are usually ordered from independent suppliers who have to manufacture the paper and ship it to the laminate manufacturing plant. Moreover, the reams of paper have to be packed so that there is a minimum amount of scrap due to handling. Thus, there are overhead costs associated with manufacturing, packing, shipping and handling these papers. At the laminate manufacturing plant, the traditional saturation grade decorative papers are treated to provide the desired decorative characteristics to the laminate. This increases the cost of manufacturing laminates using traditional papers, such as saturating grade paper. Therefore, it is desirable to manufacture a decorative film using alternate materials capable of providing uniform and intense coloring to an end product, such as a laminate. It is further desirable that such a decorative film be compatible with other layers of the laminate, such as a melamine resin impregnated overlay layer.

Attempts have been made to solve the problems associated with the manufacture of decorative sheets used in laminates.

U.S. Patent No. 4,092,199, issued May 30, 1978 to Ungar et al., discloses a high pressure decorative laminate having registered color and embossing. Ungar discloses laminating using a three dimensional press plate acting against an overlay sheet containing high flow melamine resin and pigment, so that during the pressing operation the resin and pigment flows laterally from the high pressure areas to the low pressure areas, such that the underlying print sheet is visible through the overlay sheet in the high pressure areas while the pigment in the overlay sheet in the low pressure areas masks the print sheet. A disadvantage of the system disclosed in the Ungar patent is that only part of the laminate has the desired color, while the remaining portion of the laminate displays the underlying print sheet.

U.S. Patent No. 4,284,453, issued August 18, 1981 to Endrizzi, discloses a method of imparting color highlights to a decorative laminate by inserting a pigment coated release sheet between the molding caul and the decorative surface during the molding operation. The color is transferred from the release sheet to the decorative surface during lamination.

U.S. Patent No. 4,473,613, issued September 25, 1984 to Jaisle et al., discloses a decorative laminate having a decorative sheet impregnated with (1) a first blend of a melamine/formaldehyde resin and a cross-linked, acrylic copolymer and (2) a second blend of a melamine/formaldehyde resin and an abrasive material.

U.S. Patent No. 4,741,968, issued May 3, 1988 to Dion et al., discloses a high pressure decorative laminate made with a plurality of core sheets impregnated with polyester, the polyester enabling a core color that matches the color of the decorative or face sheet.

U.S. Patent No. 5,141,799, issued August 25, 1992 to Mehta et al., discloses the use of multiple layer decor paper sheets in the production of decorative laminates.

U.S. Patent No. 5,213,883, issued May 25, 1993 to Mehta discloses a decor sheet for use in a decorative laminate having bleached cellulose fibers, about 10 to 60 percent titanium dioxide and about 1 to 20 percent cellulose acetate fibrets.

U.S. Patent No. 4,530,883, issued July 23, 1985 to Knapp et al., discloses use of polymethylol ketone in core sheets for the production of a solid color edge complementing the color of the decor surface.

U.S. Patent No. 5,573,827, issued November 12, 1996 to Kubota et al., discloses decorative paper having pigment(s) with a mean particle size of from 20 to about 100 microns and/or powdery colored fibers with a mean fiber length of from 50 to 2000 microns incorporated thereinto during papermaking.

U.S. Patent No. 5,702,806, issued December 30, 1997 to O'Dell et al., discloses a decorative laminate decor sheet made from paper having dissimilar thermoset or thermoplastic polymers to provide a brilliant visual or pearlescent appearance.

However, the prior art does not provide a decorative sheet made from alternate materials (i.e. materials other than saturating grade paper) that is compatible with other layers of the laminate and at the same time provides intense coloration to the laminate. For example, it is desirable to have such a decorative sheet bond well with a melamine overlay sheet and also with phenolic resin impregnated kraft paper sheets that are usually part of the laminate.

Thus, there is a need in the art for a system and method for producing a sheet made from alternate materials, such as a thermoplastic decorative sheet, providing the desired functional and visual characteristics to an end product, such as intense coloration and enhanced bonding with other layers of a laminate, and at the same time reducing the cost of manufacturing the end product, such as a laminate used in counter tops or other applications.

These and other objects, features and technical advantages are achieved by a layer, such as a thermoplastic decorative layer, that may be used in an end product, such as a laminate, while being compatible with other layers of the end product, such as by providing enhanced bonding with a melamine overlay layer, and at the same time providing a desired visual characteristic, such as intense and/or uniform coloring, to the end product. A system and a method for manufacturing such a layer is also disclosed.

Accordingly in an embodiment of the present invention, preferably in order to provide a decorative layer with desired characteristics, such as enhanced bonding characteristics, there is provided a film, such as a thermoplastic decorative layer, comprising material other than saturation grade paper. In a preferred embodiment, the thermoplastic film comprises a copolymer of styrene and an unsaturated monomer such as maleic acid anhydride. An adhesion promoting filler, such as a zeolite, may be used to provide a desired bonding characteristic to the film. In an alternative embodiment, the thermoplastic decorative layer may comprise a polyolefin polymer, like polyethylene, having polypolar functionality provided preferably by an unsaturated monomer, such as maleic acid anhydride. A cross-linking agent reactable with the polyolefin polymer may be used to facilitate enhanced bonding of the decorative film with other layers of the laminate. The film may also comprise a colorant or an opacifying agent, such as titanium dioxide to provide a desired color to the film.

In a preferred embodiment, such a film is placed adjacent to an alumina grit incorporated, melamine resin impregnated, overlay sheet which provides the desired abrasion resistant characteristics to the laminate. If desired, the thermoplastic film may be placed in between the melamine overlay sheet and a substrate. Moreover, sheets of phenolic resin impregnated kraft paper may be placed in between the film and the substrate of the preferred embodiment, if desired. The preferred embodiment film may also be used in an end product or application without the use of the melamine overlay sheet. Backing layers may be provided to balance the decorative side of the laminate, if desired.

The film of the preferred embodiment is preferably manufactured by a combination of compounding and extrusion, which has been discussed in detail in the above referenced U.S. Patent Application entitled, "PIGMENTED BACKER FILM AND METHOD OF PRODUCTION", which application is hereby incorporated herein by reference. Styrene and an unsaturated monomer, such as maleic anhydride, may be copolymerized to form styrene maleic anhydride, preferably in the form of pellets. The pellets of styrene maleic anhydride may then be mixed with an adhesion promoting filler or agent such as a zeolite preferably in an extruder. The addition of the adhesion promoting filler provides the styrene maleic anhydride with characteristics that facilitate enhanced bonding with other layers of an end product, such as a melamine resin impregnated overlay layer of a laminate. A colorant may also be added in the extruder to impart a desired color to the mixture. The mixture of the styrene maleic anhydride, the filler and optionally the colorant is heated to a temperature that is above the melt temperature of the copolymer. The heated mixture may then be formed into a film by passing it through an extrusion die. The film from the die may be passed through a three roll stack to provide the desired thickness to the film and also to provide a desired surface finish to the film. The rolls of the three roll stack may be chilled in order to cool the film to below the melting temperature of the polymer.

In an alternative embodiment, instead of copolymerizing styrene and an unsaturated monomer, such as maleic anhydride, to form pellets of styrene maleic anhydride, commercially available pellets of styrene maleic anhydride, such as DYLARK® manufactured by NOVA Chemicals, Inc. may be used to form the thermoplastic film of the preferred embodiment.

The polyolefin film of the alternative embodiment discussed above is preferably manufactured by heating a mixture of a polyolefin polymer having polypolar functionality provided by an unsaturated monomer, and a cross-linking agent reactable with the polyolefin polymer to a temperature that is above the melt temperature of the polyolefin to form a heated mixture. A colorant may also be used to impart a desired color to the mixture, if desired. The heated mixture is then formed into a film through extrusion and compounding substantially as described above with regard to the styrene maleic anhydride copolymer film. The film is finally cooled to below the melting temperature of the polyolefin to form the thermoplastic film with the desired bonding characteristics.

The thermoplastic film produced by the methods described above provide the further advantage that the addition of the colorant during the compounding process provides a desired intense or uniform coloration to the film. This is possible due to the fact that the colorant that is added during the compounding process is totally mixed with the copolymer, i.e. a very small amount, if any, of the colorant that is added at one end of the extruder does not mix with the copolymer. Thus, a uniformly, homogeneously dispersed colored mixture may be obtained by the compounding and extrusion process discussed above. Therefore, small sized particles of colorant may be used for uniform dispersion as larger size colorant particles do not disperse uniformly throughout the mixture.

In order to make the end product, such as a laminate, in which this film may be used, in a preferred embodiment, a stack comprising of one or more resin impregnated layers and the thermoplastic film as described in the above embodiments is assembled. The assembled stack is then subjected to sufficient heat and pressure for a predetermined period of time to cause the resin in the layers to flow, cure and consolidate the stack into a laminate with a decorative surface. The cured stack may be bonded or attached to one surface of a substrate, if desired. Furthermore, a backing layer may be used on the other side of the substrate to balance the layers of the decorative side. Moreover, the backing layer may also include the film as described in the above embodiments to balance the film of the decorative side.

Therefore, it is a technical advantage of the present invention to provide a thermoplastic layer that may be used in an end product, such a thermoplastic layer being compatible with other layers of the end product and at the same time providing a desired visual characteristic to the end product.

It is another technical advantage of the present invention to provide a decorative layer with the desired visual characteristics that also exhibits superior bonding with other layers of a laminate.

It is yet another technical advantage of the present invention to provide a laminate with a thermoplastic decorative layer that is compatible with other layers of the laminate.

It is yet another technical advantage of the present invention to provide a laminate with a thermoplastic decorative layer that provides an intense color to the laminate.

It is still another technical advantage of the present invention to provide an intensely colored flooring laminate with a wood based substrate.

It is still another technical advantage of the present invention to provide a flooring laminate having a core layer or substrate composed of an Alternate Substrate Material (ASM) and having the desired bonding and visual characteristics.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

It is an object of the invention to provide a decorative laminate comprising a first layer of a resin impregnated sheet; and a second decorative layer, said second decorative layer being a thermoplastic decorative film, said thermoplastic decorative film being adapted to provide enhanced adhesion of said second layer with said first layer, and said first and second layers being positioned adjacent to each other.

According to another feature of the invention, the decorative further comprising a substrate, said second decorative layer being positioned between said first layer and said substrate.

It is an object of the invention to provide a decorative laminate comprising a fifth decorative layer positioned adjacent to said substrate distal from said decorative layer.

According to another feature of the invention, the decorative laminate comprises a sixth balancing layer positioned adjacent to said fifth decorative layer to provide a balancing characteristic to said laminate; said fifth decorative layer being positioned between said sixth balancing layer and said substrate.

According to another feature of the invention, said thermoplastic film is a copolymer of a first monomer and a second monomer.

According to another feature of the invention, said first monomer is styrene.

According to another feature of the invention, said second monomer is an unsaturated monomer.

According to another feature of the invention, said first monomer is selected from the group consisting of ethylene, propylene, and butylene.

According to another feature of the invention, said unsaturated monomer is maleic anhydride.

According to another feature of the invention, said thermoplastic film comprises a polyolefin polymer having polypolar functionality.

According to another feature of the invention, said polyolefin polymer has a polypolar functionality selected from the group consisting of polyethylene, polypropylene, polybutylene, a copolymer of ethylene with higher α,β-unsaturated olefin, and a copolymer of propylene with higher α,β-unsaturated olein.

According to another feature of the invention, said thermoplastic film comprises a cross-linking agent reactable with said substance providing polypolar functionality, wherein said cross-linking agent promotes reaction of said polyolefin with said first layer.

According to another feature of the invention, said cross-linking agent is selected from the group consisting of urea, a di-functional amine, and a poly-functional amine.

According to another feature of the invention, said thermoplastic film further comprises a colorant.

According to another feature of the invention, said colorant is distributed throughout said thermoplastic film to provide a uniformly homogeneous coloration to said film.

According to another feature of the invention, said colorant is an opacifying agent.

According to another feature of the invention, said opacifying agent is titanium dioxide. According to another feature of the invention, said colorant is selected from the group consisting of inorganic pigments, metal oxides, organo-metallic pigments, and carbon black.

According to another feature of the invention, said thermoplastic film further comprises a zeolite to provide enhanced adhesive characteristic to said first decorative layer.

According to another feature of the invention, said thermoplastic film further comprises at least one additive selected from the group consisting of antioxidants, cross linking agents, stabilizers, ultraviolet ray protective agents, lubricants, foaming agents, antistatic agents, organic and inorganic flame retardants, plasticizers, dyes, pigments, talc, calcium carbonate, carbon black, mica, glass fibers, carbon fibers, and aramid resin.

According to another feature of the invention, the thermoplastic film comprises approximately 86 to 90 percent by weight of styrene and approximately 14 to 10 percent by weight of unsaturated monomer, based on the total weight of styrene and monomer.

According to another feature of the invention, the melt flow index of the copolymer is in the range of approximately 0.8 to 2.0.

According to another feature of the invention, first layer of resin impregnated sheet is a phenolic resin impregnated kraft paper sheet.

According to another feature of the invention, said first layer of resin impregnated sheet is a melamine overlay sheet.

According to another feature of the invention, said thermoplastic decorative film bonds readily with a melamine resin impregnated high alpha cellulose content paper sheet.

According to another feature of the invention, said polypolar functionality is provided to said polymer by maleic acid anhydride.

According to another feature of the invention, said polypolar functionality is provided to said polymer by acrylic acid.

It is an other object of the invention to provide a thermoplastic film for use in an end application, said thermoplastic film comprising a first substance, wherein said first substance provides a superior bonding characteristic to said thermoplastic film; and a second thermoplastic material having a desired characteristic.

According to another feature of the invention, said second thermoplastic material comprises styrene.

According to another feature of the invention, said second thermoplastic material comprises a polyolefin polymer.

According to another feature of the invention, said second thermoplastic material is extrudable.

According to another feature of the invention, said second thermoplastic material is a copolymer of styrene and an unsaturated monomer to provide a desired thermoplastic characteristic to said thermoplastic film.

According to another feature of the invention, said second thermoplastic material is a polyolefin polymer to provide a desired thermoplastic characteristic to said thermoplastic film, wherein said polyolefin polymer has polypolar functionality.

According to another feature of the invention, said thermoplastic film comprises a cross-linking agent reactable with a substance providing said polypolar functionality to said polyolefin polymer, wherein said cross-linking agent promotes reaction of said polyolefin with a melamine resin impregnated laminate material.

According to another feature of the invention, said first substance is an adhesion promoting agent.

According to another feature of the invention, said adhesion promoting agent comprises a zeolite.

According to another feature of the invention, said adhesion promoting agent is selected from the group consisting of a natural zeolite and a synthetic zeolite.

According to another feature of the invention, the thermoplastic film further comprises a melamine resin impregnated layer placed adjacent to said thermoplastic film, said first substance facilitating bonding of said thermoplastic film with said melamine resin impregnated layer.

According to another feature of the invention, the thermoplastic film further comprises a phenolic resin impregnated layer placed adjacent to said thermoplastic film at an opposite end to said melamine resin impregnated film, said first substance facilitating bonding of said thermoplastic film with said phenolic resin impregnated layer, said phenolic resin impregnated layer providing support to said thermoplastic layer.

According to another feature of the invention, the thermoplastic film further comprises a third substance, said third substance being uniformly distributed in said thermoplastic film to provide a desired homogeneous coloration to said thermoplastic film.

According to another feature of the invention, said third substance provides a tint to said film.

According to another feature of the invention, said third substance is a colorant capable of being uniformly distributed in said thermoplastic film.

According to another feature of the invention, said unsaturated monomer is maleic anhydride.

According to another feature of the invention, said unsaturated monomer is selected from the group consisting of an α,β-unsaturated carboxylic acid and an α, β-unsaturated anhydride.

According to another feature of the invention, said α,β-unsaturated carboxylic acid is selected from the group consisting of crotonic acid, acrylic acid, methacrylic acid, sorbic acid, cinnamic acid, and fumaric acid.

According to another feature of the invention, said α,β-unsaturated anhydride is selected from the group consisting of tetrahydrophthalic anhydride, dodecenyl anhydride, and dimethyl maleic anhydride.

According to another feature of the invention, said thermoplastic film bonds readily with a melamine resin impregnated overlay sheet.

According to another feature of the invention, said thermoplastic film bonds readily with a phenolic resin impregnated halt paper sheet.

According to another feature of the invention, said thermoplastic film bonds readily with a phenolic resin impregnated kraft paper sheet and a melamine resin impregnated overlay sheet.

According to another feature of the invention, said end application is selected from the group consisting of a sign board, a wall paper, a floor covering, a decorative laminate and a food container.

It is also an object of the invention to provide a laminate comprising:
- a first layer of a laminate material providing a protective characteristic to said laminate;
- a second layer of a laminate material; and
- a third decorative layer, wherein said decorative layer is a thermoplastic film that has been adapted to provide a desired bonding characteristic with said first layer and said second layer, and wherein said third layer is positioned between said first layer and said second layer.

According to another feature of the invention, said decorative layer is adapted to provide a desired appearance to said laminate,

According to another feature of the invention, said decorative layer is adapted to provide a homogeneous color to said laminate.

According to another feature of the invention, said decorative layer includes a colorant to provide said desired appearance to said laminate.

According to another feature of the invention, said decorative layer includes a first substance to provide said desired bonding characteristic to said decorative layer.

According to another feature of the invention, said first layer of said laminate is a melamine resin impregnated overlay layer, wherein said first layer includes alumina grit to provide said protective characteristic to said laminate.

According to another feature of the invention, said thermoplastic film comprises a copolymer of styrene and an unsaturated monomer.

According to another feature of the invention, said thermoplastic film comprises a polyolefin polymer including a substance providing polypolar functionality.

According to another feature of the invention, said thermoplastic film comprises a cross-linking agent reactable with said substance providing said polypolar functionality, wherein said cross-linking agent promotes reaction of said polyolefin with said first and second layers.

It is also an object of the invention to provide a method of making a thermoplastic film, comprising:
- heating a mixture of styrene and an unsaturated monomer to form a copolymer;
- selecting a first substance to be added to said copolymer to provide a desired bonding characteristic to said thermoplastic film;
- determining an amount of said first substance to provide said desired bonding characteristic to said film; and
- converting a mixture of said copolymer and said determined amount of said first substance into said thermoplastic film having said desired bonding characteristic.

According to another feature of the invention, said converting step comprises the steps of:
- selecting a desired amount of a colorant to be added to said mixture to provide a desired color to said thermoplastic film;
- feeding said mixture along with said determined amount of said colorant through an extruder resulting in another molten polymer; and
- forming a thin layer of colored thermoplastic film by passing said another molten polymer through an extrusion die.

According to another feature of the invention, the method further comprises the step of providing a desired surface finish to said thermoplastic film.

According to another feature of the invention, the method further comprises the step of bonding said thin layer of colored thermoplastic film to a first melamine resin impregnated overlay layer.

According to another feature of the invention, the method further comprises the steps of:
- attaching said thin layer of colored thermoplastic film to a first surface of a substrate with said thermoplastic film adjacent to said first surface of said substrate; and
- adhering a backing layer to a second surface of said substrate, wherein said second surface is opposite from said first surface.

According to another feature of the invention, said backing layer comprises a second melamine resin impregnated layer to balance said first melamine resin impregnated layer.

According to another feature of the invention, said colorant provides a desired uniform coloring to said thermoplastic film.

According to another feature of the invention, said first substance is an adhesion promoting agent, wherein said adhesion promoting agent promotes bonding of said thermoplastic film with a resin impregnated laminate material.

According to another feature of the invention, said adhesion promoting agent is a zeolite.

According to another feature of the invention, said resin impregnated laminate material is a melamine resin impregnated overlay sheet.

According to another feature of the invention, said resin impregnated material is a phenolic resin impregnated kraft paper.

Its is also an object of the invention to provide a method of making a laminate, comprising the steps of:
- assembling a stack comprising of a melamine resin impregnated layer and a thermoplastic film, wherein said thermoplastic film has been adapted to provide enhanced bonding with said melamine resin impregnated layer; and
- applying a predetermined amount of heat and pressure for a predetermined amount of time to cause the resin to cure and consolidate the stack into a laminate.

According to another feature of the invention, said thermoplastic film includes a first substance to provide a desired bonding between said thermoplastic film and said melamine resin impregnated layer.

According to another feature of the invention, said thermoplastic film includes a colorant to provide a desired uniform coloring to said thermoplastic film.

According to another feature of the invention, said colorant is selected from the group consisting of inorganic pigments, metal oxides, organo-metallic pigments, and carbon black.

According to another feature of the invention, said thermoplastic film is a copolymer of styrene and an unsaturated monomer.

According to another feature of the invention, said unsaturated monomer is maleic anhydride.

According to another feature of the invention, said thermoplastic film comprises a polyolefin polymer having a polypolar functionality.

According to another feature of the invention, said thermoplastic film includes a cross-linking agent reactable with a substance providing said polypolar functionality to said polyolefin, wherein said cross-linking agent promotes reaction of said polyolefin with said melamine resin impregnated layer.

Its is also an object of the invention to provide a product, comprising:
- a melamine resin impregnated layer to provide a protective characteristic to said product; and
- a thermoplastic film bonded with said melamine layer, wherein said film comprises a copolymer of styrene and an unsaturated monomer, and an adhesion enhancing agent to provide enhanced bonding of said thermoplastic film with said melamine resin impregnated layer.

According to another feature of the invention, said product is a laminate.

According to another feature of the invention, the product further comprises a phenolic resin impregnated layer, said thermoplastic film bonding readily with said phenolic resin impregnated layer.

According to another feature of the invention, the product further comprises a substrate, said thermoplastic film being affixed to said substrate to provide support to said thermoplastic film.

According to another feature of the invention, said thermoplastic film comprises a predetermined amount of said adhesion enhancing agent to provide a desired bonding between said thermoplastic film and said melamine resin impregnated layer.

According to another feature of the invention, said substrate comprises at least one substrate selected from the group consisting of a hardboard, a particle board, a plywood, a mineral base board, a sheet rock, a plaster board, a medium density fiberboard and a high density fiberboard.

According to another feature of the invention, said thermoplastic film further includes a colorant to provide a desired uniform coloring to said film.

According to another feature of the invention, said colorant is selected from the group consisting of an inorganic pigment, a metal oxide, an organo-metallic pigment, and carbon black.

It is also an object of the invention to provide a decorative laminate, comprising:
- a resin impregnated layer; and
- a thermoplastic film positioned adjacent to said resin impregnated layer, wherein the thermoplastic film comprises a polyolefin polymer having polypolar functionality, and a cross-linking agent reactable with the polyolefin polymer to provide superior bonding with said resin impregnated layer.

According to another feature of the invention, the polypolar functionality is provided by maleic acid anhydride or acrylic acid.

According to another feature of the invention, the polyolefin polymer comprises polyethylene.

According to another feature of the invention, the decorative film further comprises a colorant to provide said decorative characteristic to said laminate.

According to another feature of the invention, the colorant is selected from the group consisting of an inorganic pigments, a metal oxide, an organo-metallic pigment, and carbon black.

According to another feature of the invention, the thermoplastic film further comprises one additive selected from the group consisting of antioxidants, cross linking agents, stabilizers, ultraviolet ray protective agents, lubricants, foaming agents, antistatic agents, organic and inorganic flame retardants, talc, calcium carbonate, carbon black, mica, glass fibers, carbon fibers, and aramid resin.

For a more complete understanding of the present invention, and the advantages thereof, reference is now made to the following descriptions taken in conjunction with the accompanying drawings, in which:
FIGURE 1 shows a schematic of a prior art laminate;
FIGURE 2 shows a schematic of a laminate in accordance with a first embodiment of the present invention;
FIGURE 3 shows a schematic of a laminate in accordance with a second embodiment of the present invention;
FIGURE 4 shows a schematic of a laminate in accordance with a third embodiment of the present invention;
FIGURE 5 shows a schematic of a laminate in accordance with a fourth embodiment of the present invention; and
FIGURE 6 shows a schematic of a laminate in accordance with a fifth embodiment of the present invention.

In FIGURE 2 an end product, such as a laminate 20, made in accordance with a first embodiment of the present invention is shown. Laminate 20 comprises a decorative surface that has a desired visual characteristic, such as intense and/or uniform coloring. Thus, the surface of the laminate presents a homogeneous, continuous and uniform appearance. The layer of the laminate providing the desired visual characteristic is also compatible with other layers of the laminate.

Laminate 20 in accordance with a first embodiment of the present invention includes, for example, an overlay layer 21 including aluminum oxide for wear resistance, a decorative layer or film 22 made in accordance with the present invention, and a substrate 23. Overlay layer 21 is usually a special kind of laminate material that has been impregnated with melamine resin and contains alumina grit of desired particle size to provide wear resistance.

In a preferred embodiment of the present invention, decorative layer 22 is a thermoplastic layer and comprises a copolymer, such as a copolymer of styrene and a suitable unsaturated monomer, such as maleic anhydride. Other unsaturated monomers may be utilized, if desired, without departing from the spirit of the present invention. For example, other unsaturated monomers that may be used include α,β-unsaturated carboxylic acids and α,β-unsaturated anhydrides, such as crotonic acid, acrylic acid, methacrylic acid, sorbic acid, cinnamic acid, maleic acid, fumaric acid, tetrahydrophthalic anhydride, dodecenyl succinic anhydride, and alkyl substituted maleic anhydrides such as dimethyl maleic anhydride. For certain end-use applications or products, more than one unsaturated monomer may be copolymerized with the styrene to provide the desired physical properties.

The selection of the type and composition of copolymer suitable for the preferred embodiment decorative layer of the present invention is preferably based on certain criteria that are desirable in the end product. For example, copolymers utilized in the present invention to produce the thermoplastic film having the desired characteristics should exhibit suitable adhesion to phenol-formaldehyde resin impregnated kraft paper when pressed into a high-pressure decorative type laminate including phenol-formaldehyde resin. It may also be desirable that such copolymers be able to adhere to layers impregnated with other resins, such as for example, melamine-formaldehyde resin. Moreover, it may also be desirable that the decorative film 22 exhibit superior bonding with high alpha cellulose content paper used in making high-pressure decorative laminates, especially overlay paper 21. Furthermore, it is desirable in a preferred embodiment that the copolymers used in the present invention be capable of being melt extruded with conventional extrusion devices, such as single screw or twin screw extruders and cast onto conventional three roll stacks so that a suitable film may be produced using the preferred embodiment extrusion and compounding method as discussed below. The film produced by such a compounding and extrusion method is capable of having uniformly homogeneous coloration when colorants are added to the copolymer during the compounding process. Moreover, it is also desirable that the copolymers used in the present invention be capable of being produced into dimensionally stable films of approximately the same thickness as conventional decorative paper used in high-pressure decorative laminates and exhibit good chemical resistance. In the preferred embodiment, the thickness of the film is approximately in the range of 0.004-0.006 inch. When necessary for food contact applications, the copolymers are preferably food grade. Finally, it is desirable that the copolymers have suitable impact strength, or be capable of being impact modified to suitable levels. In some instances, the thermal stability of the copolymer may be enhanced by cross linking with di-or tri-functional amines. Such di-functional amines include, for example, 2-methyl-1,5-pentanediamine; 1,3-diaminopentane.

As mentioned above, an example of a suitable copolymer that may be used to provide the desired characteristics to the laminate is a copolymer of styrene and an unsaturated monomer, such as maleic anhydride. The weight percentages of the styrene and unsaturated monomer utilized in the copolymer are generally selected to provide the copolymer with the desired properties (as discussed above) for use as a decorative film in a decorative laminate. A high percentage of maleic anhydride is desirable for adhesion promotion. Thus, generally, the copolymer of the present invention comprises about 50 to 99.5 percent by weight of styrene and about 50 to 0.5 percent by weight of unsaturated monomer, based on the total weight of styrene and the monomer. However, it is easier to manufacture, a copolymer comprising about 86 to 90 percent by weight of styrene and about 14 to 10 percent by weight of unsaturated monomer. In other embodiments, the copolymer may comprise about 80 to 95 percent by weight of styrene and about 20 to 5 percent by weight of unsaturated monomer.

The copolymer of styrene and unsaturated monomer which is used for the manufacture of the preferred embodiment decorative sheet of the present invention may be obtained by any suitable method. Methods of copolymerizing styrene with an unsaturated monomer are well known to those of skill in the art and the copolymer of styrene and unsaturated monomer may be obtained by copolymerizing the styrene and unsaturated monomer preferably in the presence of a suitable catalyst under suitable polymerization conditions.

The copolymer of the preferred embodiment may be impact modified with impact modifiers, such as styrene butadiene multiblock thermoplastic elastomers to increase its impact strength. It can also be impact modified with polyolefin based polymers which contain reactive groups. Typical properties of such copolymers of styrene and maleic anhydride useful in the present invention and used for this work are shown in Table 1 below:

**Table 1**

| **Resin Property** | **ASTM Method** | **Typical Value** |
|---|---|---|
| Specific Gravity | D-792 | 1.06 |
| Melt Flow, g/10 min condition L | D-1238 | 1.2 |
| Tensile strength, psi | D-638 | 5,700 |
| Elongation % | D-638 | 30 |
| Flexural Strength, psi | D-790 | 12,550 |
| Flexural Modulus, psi | D-790 | 409,000 |
| Izod Impact, notched psi | D-256 | 1.9 |

The styrene maleic anhydride copolymer layer does not provide adequate bonding with other layers of the end product, such as the melamine impregnated overlay layer 21 of the laminate, even though it exhibits excellent bonding with certain other layers, such as phenolic resin impregnated layers. Therefore, the decorative layer 22 may also include adhesion enhancing fillers or agents, such as a zeolite, to provide enhanced bonding of the preferred embodiment styrene maleic anhydride layer with other layers of the laminate, such as overlay layer 21. The addition of the adhesion enhancing fillers along with the unsaturated monomer, such as maleic anhydride, provides the desired enhanced bonding of the preferred embodiment decorative layer with the melamine overlay layer. The decorative layer 22 may also include a colorant to provide a desired color to the decorative layer and hence the end product, such as laminate 20.

Clinoptilolite is a zeolite that is preferably used as an adhesion enhancing filler. It is a unique type of volcanic ash with a cavity and has been found to promote adhesion between the decorative layer of the preferred embodiment of the present invention and the melamine impregnated overlay layer. Clinoptilolite is a natural zeolite and is commercially available from the St. Cloud Mining Company, P.O. Box 1670, Truth or Consequences, NM 87901, USA. Synthetic zeolites are also available generally at higher costs than natural zeolite. The cavity size in synthetic zeolites may be controlled according to the specific end use of the product. A suitable example of a synthetic zeolite that may be used as an adhesion enhancing filler includes molecular sieve 13X, powder available from Aldrich Chemical Company, P.O. Box 355, Milwaukee, WI 53201-9358, USA.

The decorative sheet of the preferred embodiment of the present invention may include other additives to provide desired characteristics to the sheet. Such additives include antioxidants, cross linking agents, stabilizers, lubricants, foaming agents, antistatic agents, organic and inorganic flame retardants, plasticizers, dyes, pigments, talc, calcium carbonate, carbon black, mica, glass fibers, carbon fibers, aramid resin, and ultraviolet protective agents, either UV blocking agents, or UV ray absorbers such as Tinuvin 328 and 791 FB available from Ciba Additives. Generally, the additives comprise about 0.01 to 25 percent by weight of the decorative sheet.

In another embodiment of the present invention, decorative layer 22 is a thermoplastic layer and comprises a polyolefin, such as polyethylene, having polypolar functionality preferably provided by an unsaturated monomer, such as maleic acid anhydride or acrylic acid; and a cross-linking agent reactable with the polyolefin. The polypolar functionality of the polyolefin is desirable because it facilitates bonding of the decorative layer with other layers of the end product, such as the melamine resin impregnated overlay layer 21 of the laminate of FIGURE 2. The decorative layer 22 may also include a colorant to provide a desired color to the decorative layer and hence the end product, such as laminate 20. Decorative layer 22 in accordance with this embodiment may also include a thermosetting resin.

Preferably, the polyolefin utilized in the present invention is polyethylene. However, other polyolefins may be utilized, if desired, without departing from the spirit of the present invention. For example, other polyolefins that may be used include polypropylene and polybutylene, and copolymers of ethylene, butylene or propylene with higher order α-olefins, such as, α,β-unsaturated olefins, for example, 1-hexene, or 1-octene, or the like.

The polyolefin which is used for the manufacture of the decorative sheet of the present invention may be obtained by any suitable method. In general, the polyolefin utilized in the present invention is obtained by reacting one or more α-olefins in the presence of a suitable polyolefin catalyst, for example, a Ziegler-type catalyst or a metallocene-type catalyst. Such methods and catalysts for obtaining polyolefins are well known in the art. Moreover, the polyolefins utilized in the present invention may be homopolymers or copolymers of the selected α-olefins.

In general, the α-olefins utilized in the present invention have from 2 to 12 carbon atoms per monomer unit. In the most preferred embodiment, the α-olefins have about 2 to 3 carbon atoms. Such α-olefins include polyethylene and polypropylene. In other embodiments the α-olefins comprise about 2 to 8 carbons atoms, or about 2 to 4 carbon atoms.

As mentioned above, the polyolefin utilized in the present invention preferably has polypolar functionality. Generally, the polypolar moiety groups providing the polypolar functionality may be (i) on the polyolefin backbone through copolymerization with the olefin; (ii) grafted onto the main polymer backbone; and/or (iii) on the terminal ends of the polymer backbone. In the preferred embodiment, maleic acid anhydride is used as a polypolar moiety for grafting with the polyolefin, such as polyethylene. In alternative embodiments, acrylic acid may be used in place of the maleic acid anhydride. Other unsaturated monomers may be utilized, if desired, without departing from the spirit of the present invention. For example, other unsaturated monomers that may be used include α,β-unsaturated carboxylic acids and α,β-unsaturated anhydrides, such as crotonic acid, acrylic acid, methacrylic acid, sorbic acid, cinnamic acid, maleic acid, fumaric acid, tetrahydrophthalic anhydride, dodecenyl succinic anhydride, and alkyl substituted maleic anhydrides such as dimethyl maleic anhydride. For certain end-use applications or products, more than one unsaturated monomer may be copolymerized with the styrene to provide the desired physical properties.

The cross-linking agent of the present invention is generally selected to be reactive with the polypolar moiety groups of the polyolefin, and to promote reaction of the polyolefin with melamine or phenolic type resins as are commonly utilized with decorative laminates. The cross-linking agents that may be used with the present invention include urea, di- and poly- functional amines. Other cross-linking agents providing the desired properties may be used without departing from the spirit of the present invention.

The melt flow index of the copolymer utilized in the preferred embodiment or the polyolefin utilized in the alternative embodiment of the present invention may be selected to provide the copolymer or polyolefin with the desired physical properties for the desired end-use application or product. Furthermore, the melt flow index may be selected based on the equipment used. Generally, the melt flow index may be in the range of about 0.1 to 100. In the most preferred embodiment, the melt flow index may be in the range of about 0.8 to 2.0. In other embodiments, the melt flow index may be in the range of about 0.5 to 10.

As mentioned above, the decorative sheet of the present invention may also include one or more colorants selected to provide a desired color for the intended final use of the decorative sheet of the present invention. To be used as a decorative layer, opacity and color are often important considerations. In a preferred embodiment, the color of the decorative film is opaque white or off-white. Copolymers and polyolefins of the above embodiments may be readily opacified with titanium dioxide or colored with standard pigments used in the colored plastics industry. In the preferred embodiment, pigments that need to be dispersed with dispersing agents are not used as the dispersing agents may bloom to the surface, thus adversely affecting adhesion between the decorative layer and the layers adjacent to it. However, any type of pigment or colorant may be used without departing from the spirit of the present invention.

It is desirable that the selected colorant be compatible with the other components in the decorative sheet, and does not have an unduly negative effect on the physical properties of the sheet. As such, colorants that may be advantageously used to provide the desired color to the decorative sheet of the present invention include but are not limited to inorganic pigments, metal oxides, organo-metallic pigments, and carbon blacks. Commercially available brands of colorants that may be used include but are not limited to white pigments such as titanium dioxide, for example, Ti-Pure R-960 available from DuPont, or Kemira 630 available from Kemira Pigments, Inc. (Savannah, GA 31402 USA); black pigments such as carbon black, for example, Black Pearls available from Cabot Corporation (Waltham, MA 02254 USA); red pigments, for example, Bayferrox 130 available from Bayer Corporation; pearlescent and iridescent pigments, for example, Super Bronze 259Z available from Englehard Corporation (Iselin, NJ 08830 USA); and light interference pigments made by thin-film deposition technology producing ultra-thin, multilayer interference flakes available from Flex Products (Santa Rosa, CA 95407 USA).

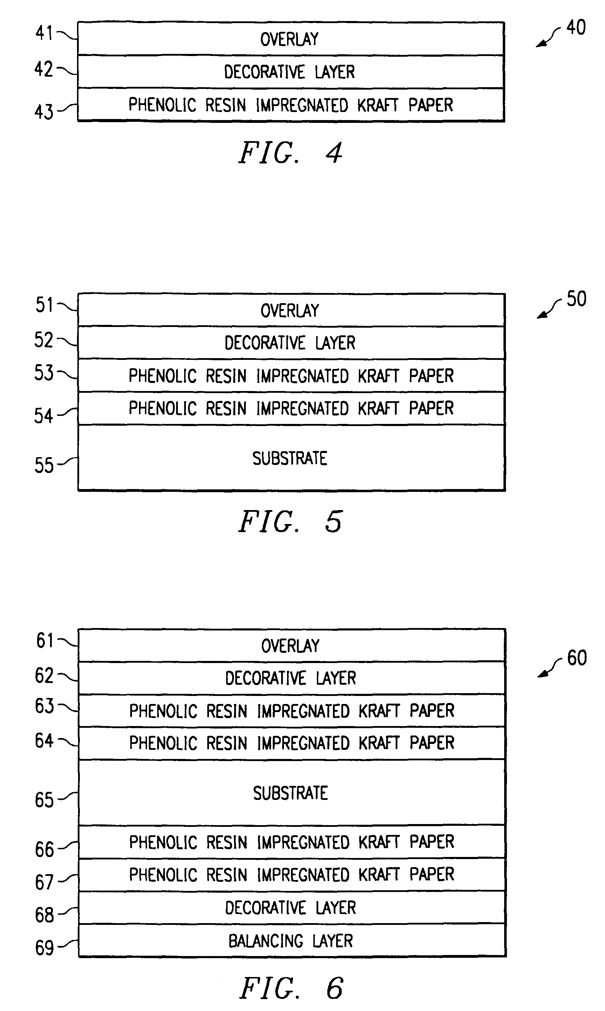

The thermoplastic film of the present invention may be used in a wide variety of applications requiring a uniformly colored decorative sheet. For example, the decorative sheet of the present invention may be utilized in sign boards, wall paper, floor coverings, or decorative laminates. However, in the most preferred embodiment the decorative sheet of the present invention is utilized as a decorative layer in a laminate. Moreover, the preferred embodiment decorative film may also be utilized in the backing layer of a laminate to provide water resistant characteristics to the laminate as discussed in greater detail in the above referenced U.S. Patent Application, entitled "PIGMENTED BACKER FILM AND METHOD OF PRODUCTION", which is hereby incorporated herein by reference. Since the thermoplastic film of the present invention provides enhanced adhesion to melamine resin impregnated sheets due to the incorporation of additives, the film used in the backer laminate may be used adjacent to the bottom most layer in a laminate assembly comprising a melamine resin impregnated balancing layer as the bottom most layer as shown in the embodiment of FIGURE 6.

FIGURE 3 shows a decorative laminate 30 of a second embodiment. Laminate 30 comprises a melamine resin impregnated overlay layer 31 and a thermoplastic decorative layer 32. This embodiment of the laminate does not include a substrate. The decorative layer 32 may include additives, such as a zeolite, to provide enhanced adhesion to the overlay layer 31.

FIGURE 4 shows a decorative laminate 40 of a third embodiment. Laminate 40 comprises an overlay layer 41, a thermoplastic decorative layer 42, and phenolic resin impregnated kraft paper 43. Due to the addition of additives, such as a zeolite, the preferred embodiment decorative layer 42 bonds well with the overlay layer 41 which is preferably impregnated with melamine resin. If desired, additional layers of laminate material, such as kraft paper, impregnated with resins may be used in the decorative laminate of FIGURE 4.

FIGURE 5 shows a decorative laminate 50 of a fourth embodiment. As shown, laminate 50 may comprise one or more layers of laminate material, such as resin impregnated paper sheets, consolidated or bonded together into a unitary structure under heat and pressure using methods that are well known in the art. In general the decorative laminate assembly as shown in FIGURE 5, from the bottom up, comprises of one or more sheets 53, 54 of kraft paper impregnated with phenolic resin, above which lies the preferred embodiment thermoplastic decorative sheet 52. A melamine resin impregnated overlay sheet 51 may be positioned on top of the decorative sheet of the present invention, if desired. The unitary structure described above may be bonded with a substrate 55 as shown in the embodiment of FIGURE 5.

The substrate functions to impart rigidity to the laminate. The core or substrate may be a wood product, such as hardboard, woodwaste, particle boards, plywood, chipboard, medium density fiberboard, high density fiberboard, particle board or the like; a mineral base board, such as cement-asbestos board, sheet rock, plaster board, and the like, or a combination of these substrates. Alternate Substrate Materials (ASM), such as non-wood cores or substrates like synthetic or non-cellulose substrate material, for example recycled plastic substrates, ABS/PC, nylon, PVC, polystyrene, any olefins, or like materials alone or in combination with like or unlike materials, such as calcium carbonate, magnesium hydroxide, talc, clays, glass fiber, carbon fibers, fire retardants, smoke suppressors, wollastonite may also be used as substrates, if desired.

FIGURE 6 shows a laminate 60 of a fifth embodiment. As shown, laminate 60 may comprise one or more layers of laminate material, such as resin impregnated paper sheets, consolidated or bonded together into a unitary structure under heat and pressure using methods that are well known in the art. In general the decorative laminate assembly, from the bottom up, comprises of one or more sheets 63, 64 of kraft paper impregnated with phenolic resin, above which lies the preferred embodiment decorative sheet 62. A melamine resin impregnated overlay sheet 61 may be positioned on top of the decorative sheet of the present invention, if desired. The unitary structure described above may be bonded with a substrate 65 as shown in the embodiment of FIGURE 6. A backing layer may be provided to balance the layers of the decorative side. The backing layer from the top down as shown in the embodiment of FIGURE 6 includes one or more sheets 66, 67 of phenolic resin impregnated kraft paper, and a thermoplastic decorative layer 68 of the present invention. A balancing layer 69 preferably impregnated with melamine resin may be placed adjacent to the thermoplastic decorative layer 68. Since the thermoplastic layer 68 includes an adhesion enhancing agent, such as a zeolite, it provides a desired adhesion with the melamine resin impregnated balancing layer 69. Balancing layer 69 balances overlay layer 61 and prevents laminate 60 from warping due to pressure exerted by the movement of melamine of the overlay layer 61.

As discussed above, the preferred embodiment film of the present invention is generally made by selecting the type and amount of the ingredients and heating the ingredients to a temperature above their melting temperature, but below the temperature at which any substantial degradation will occur, and then forming the melted mixture into a film. A wide variety of methods for making film from melted polymers are known to exist, such as molding thin films, extrusion, blown films, or utilizing rollers.

To make the preferred embodiment decorative layer of styrene-maleic anhydride copolymer, commercially available pellets of styrene maleic anhydride copolymer, such as DYLARK® manufactured by NOVA Chemicals, Inc. may be dried, preferably in a forced air drying chamber to a dew point of -40°C. In the alternative, the desired ingredients, such as styrene and an unsaturated monomer like maleic anhydride, may be polymerized together, formed into pellets, if desired, and used in place of the DYLARK® pellets.

The dried pellets of DYLARK® (or copolymerized pellets of styrene maleic anhydride) and a predetermined amount of an adhesion promoting filler, such as a zeolite, may be added to the main feed throat of an extrusion molding device, such as a Berstorf twin screw corotating extruder. Of course a single screw extruder may also be used for this purpose, although a twin screw extruder is preferred over a single screw extruder for more even mixing of the components to be extruded. If desired, pigment particles may also be added to the main feed throat of the extrusion molding device to provide a desired color to the film. The rate at which the pellets of DYLARK®, the adhesion promoting filler and pigment particles are added to the extruder may be controlled to provide a film of desired adhesion and color. The screws on the extruder are preferably 25 mm in diameter and the screw elements may be selected to give good mixing of the ingredients. In alternative embodiments, screws of diameters different than 25 mm may be used without departing from the spirit of the present invention. For example, the diameter of the screws may vary in the range of approximately 25-200 mm. The length to diameter ratio of the extruder is preferably 24 to 1, although extruders of different length to diameter ratios, such as for example 40 to 1 may also be used without departing from the scope of the present invention. The extruder may be segmented preferably into six zones of equal length. The different segments of the extruder may be equipped with heating and cooling elements. The temperature inside the different zones of the extruder may be individually or collectively controlled, if desired, to promote the melting of the mixture and facilitate even mixing of the copolymer with the filler and the colorant. For example, in the preferred embodiment, the temperature inside zone 1 is preferably maintained at 170°C, inside zone 2 at 200°C, inside zone 3 at 210°C, inside zone 4 at 230°C, inside zone 5 at 230°C, and inside zone 6 at 240°C. The mixture of DYLARK®, the adhesion promoting filler and the pigment is passed through the different zones of the extruder. The different zones of the extruder melt the polymer into a molten state, mix the polymer with the additives and the colorant, and move the molten mixture towards an extrusion die.

The molten mixture may then be forced through the extrusion die, preferably having a coat hanger type extrusion head, which preferably has an adjustable slit opening at the end. The die lips may be adjusted to produce a film of desired thickness, such as approximately 0.005 inches. This may be desirable to minimize orientation effects in the film. The temperature between zone 6 of the extruder and the die is preferably maintained at 248°C. The die temperature is preferably set to 240°C.

The extruded film is then preferably cast onto a roll of a three roll stack. The rolls of the three roll stack may be chilled if desired. In essence, the film is cast between a first and second roll. It wraps around the second roll in an "S" shape and comes in contact between the second and third rolls. It then wraps around the third roll and is taken off. If desired, the edges of the film may be trimmed to a specific length or width, or they may be cut into desired patterns. The rate of rotation of the rolls in the stack may be adjusted so that the portion of the film between the die lips and the surface of the three roll stack is minimally stretched. Moreover, the gap between the three rolls of the three-roll stack may be adjusted to farther control the thickness of the film. Thus, the three-roll stack may be used to cool down the film coming out of the die and also to control the thickness of the film. Furthermore, the three roll stack may be used to transfer a desired surface finish to the film.

Thus, the thermoplastic decorative film of the preferred embodiment of the present invention may be obtained by carefully controlling the amount and type of different ingredients that are introduced in the extruder and also by controlling the temperature of the extruder and the die.

Although, the preferred embodiment process has been described above with respect to using a single extrusion molding device and a single extrusion die, the invention is not so limited and more than one extrusion molding device and extrusion die may be used for making the preferred embodiment film as described in the above referenced U.S. Patent Application, entitled "PIGMENTED BACKER FILM AND METHOD OF PRODUCTION".

### EXAMPLES

The following non-limiting examples are provided merely to illustrate the present invention and are not meant to limit the scope of the claims of the present invention.

### Example 1

Dylark 481 was added to the main feed throat of the extruder at 12 pounds per hour. Stone House Natural Zeolite was also added to the main feed throat of the extruder at three pounds per hour. Extruder temperatures were set as described above. The extruder film was approximately 0.005 to 0.006 inches thick. The extruded film was translucent and the color of the film was light brown.

### Example 2

Dylark 481 was added to the main feed throat of the extruder at 12 pounds per hour. Ti-Pure R-960 was also added to the main feed throat of the extruder at 1.5 pounds per hour. Extruder temperatures were set as described above. The extruded film was approximately 0.005 to 0.006 inches thick. The extruded film was opaque and the color of the film was white.

### Example 3

Dylark 481 was added to the main feed throat of the extruder at 14.25 pounds per hour. Perma-Glow CP-05, a phosphorescent pigment, was also added to the main feed throat of the extruder at 0.75 pounds per hour. The extruder temperatures were set as described above. The film was approximately 0.007 inches thick and translucent. After exposure to indoor or outdoor lightning the film glowed in the dark. The film produced by this method may be used to provide a decorative surface to laminates used in areas that are dimly lighted, such as kitchens at night, or to provide a psychedelic experience such as in a bowling alley. It may also be used to provide different glowing patterns to floors and counter tops or any other surface on which such laminates are used.

### Example 4

Dylark 481 was added to the main feed throat of the extruder at 11.25 pounds per hour. Stone House Natural Zeolite was also added at 1.5 pounds per hour, titanium dioxide was added at 1.5 pounds per hour, and Perma-Glow CP-05 was added at 0.75 pounds per hour. These three powdered materials were premixed together in a weight ratio of 2:2:1 and then added with one feeder to the main feed throat of the extruder at a rate of 3.75 pounds per hour. The resulting film was white in color and opaque. Its thickness was approximately 0.007 inches. After exposure to indoor or outdoor lighting this film glowed in the dark. The film produced by this method may be used to provide laminates in areas that are dimly lighted, such as kitchens at night, or to provide a psychedelic experience such as in a bowling alley. It may also be used to provide different glowing patterns to floors and counter tops or any other surface on which such laminates are used.

### Example 5

Dylark 481 was added to the main feed throat of the extruder at 13.88 pounds per hour along with Printex XE-2 carbon black at 1.12 pounds per hour. The black film that resulted had a surface resistance of 8x10² ohms per square and a volume resistance of 8x10² ohms. Both resistance measurements were taken with a 10-volt potential between standard 5-pound electrodes similar to the ASTM D-257 test method. The addition of this carbon black produced a conductive sheet, which may have applications in surfacing where static dissipating properties may be important.

The film obtained by the process as discussed above provides several advantages over the prior art. For example, the use of expensive saturating grade paper is eliminated, thus reducing the cost of raw materials. Moreover, the overhead costs associated with the handling and shipping of such saturating grade paper is reduced as the thermoplastic film may be manufactured in the laminate plant. Thus, the laminate may be made less expensively.

Furthermore, as substantially all of the preferred embodiment pigment particles added to the feed throat of the extruder get incorporated into the film due to the compounding and extrusion process, small sized pigment particles may be used to provide more uniform and consistent coloring to the laminate then is provided by coloring the saturating grade paper of the prior art. Moreover, the wastage of pigments associated with the prior art pigmenting procedure is reduced as substantially all of the particles of pigment that are introduced at one end of the extrusion process get incorporated in the film and come out at the other end as part of the film. Also, the thermoplastic film of the present invention bonds more easily than a traditional plastic sheet with the melamine overlay layer and the phenolic resin impregnated kraft paper sheet due to the addition of adhesion enhancing fillers.

Furthermore, although the present invention has been described mostly with regard to a decorative thermoplastic layer, the invention is not so limited and the film may be used as part of the backer layer of a laminate. Moreover, the decorative layer of the present invention as discussed above may be used in a laminate without corresponding use of a backer layer and/or a substrate, if desired. For example, a panel having a decorative layer on one or all sides may be utilized in any of a number of orientations to provide a surface with uniform coloration.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A decorative laminate, comprising:
a first layer of a resin impregnated sheet; and
a second decorative layer, wherein said second decorative layer is a thermoplastic decorative film, wherein said thermoplastic decorative film has been adapted to provide enhanced adhesion of said second layer with said first layer, and wherein said first and second layers are positioned adjacent to each other.

2. The decorative laminate of claim 1, wherein said enhanced adhesion is provided by the addition of a substance to said thermoplastic decorative film prior to formation of said thermoplastic decorative film.

3. The decorative laminate according to claim 2, wherein said substance is a zeolite.

4. The decorative laminate according to claim 1, 2 or 3, wherein said second decorative layer has been adapted to provide a uniform coloring to said decorative laminate.

5. The decorative laminate according to claim 4, wherein said uniform coloring is provided to said second decorative layer due to the addition of colorants of predetermined particle size to said second decorative layer prior to formation of said second decorative layer.

6. The decorative laminate according to anyone of claims 1 to 5, wherein said first layer is a melamine resin impregnated overlay layer adapted to provide wear resistance to said decorative laminate.

7. The decorative laminate according to anyone of claims 1 to 6, further comprising:
a third phenolic resin impregnated layer positioned adjacent to said second decorative layer distal from said first layer to provide support to said laminate.

8. The decorative laminate according to anyone of claims 1 to 7, further comprising:
a substrate, wherein said second decorative layer is positioned between said first layer and said substrate.

9. The decorative laminate according to claim 8, wherein said substrate is a non-wood based substrate.

10. The decorative laminate according to claim 8 or 9, further comprising:
a fourth phenolic resin impregnated layer positioned adjacent to said substrate between said substrate and said second decorative layer.
